# EUROPÄISCHE PATENTANMELDUNG

(11) **EP 1 918 931 A1**
(43) Veröffentlichungstag der Anmeldung: **07.05.2008**
(21) Anmeldenummer: 06022693.3
(22) Anmeldetag: 31.10.2006
(51) Int. Cl.: G11B 23/40, G11B 7/24

(54) **Grafikdesigndisc**

(71) Anmelder: Elsässer, Volker, 72160 Horb (DE)
(72) Erfinder: Elsässer, Volker, 72160 Horb (DE)

(57) **Zusammenfassung**

Datenträger in Form von CDs, DVDs, HD-DVDs oder Blueray-Discs mit einer oder mehreren in das Datenfeld integrierten, ringförmigen Beschriftungsflächen zum Einbrennen von nach außen sichtbaren, einfarbig weißen Text- oder Grafiksymbolen (Zeichnung 1) zu Informations- oder Werbezwecken.

Die Integration von sprachlichen oder grafischen Mitteilungen in die Datenfläche von Datenträgern erspart einerseits deren gesondertes Bedrucken mit den üblicherweise verwandten, nicht lebensmittelechten UV-Farben in einem zweiten Arbeitsgang und ermöglicht dadurch andererseits, dass diese Datenträger z.B. Lebensmittel= packungen beigelegt werden können.

## Beschreibung

Die Erfindung bezieht sich auf das Gebiet der Herstellung von bespielten Datenträgern in der Form von CDs, DVDs, HD-DVDs und Blueray-Discs, mit Ausnahme von Musik-CDs.

Diese Medien als Träger bestimmter Daten werden nach dem derzeitigen Stand der Technik mit Hilfe eines Stampers industriell in großer Zahl gepresst. Anschließend werden sie in einem gesonderten Arbeitsgang auf der Seite über der Reflexionsschicht (Oberseite) mit einem Aufdruck, aus dem sich der Inhalt oder/und werbliche Mitteilungen ergeben, versehen.

Dieser zweite Arbeitsgang, zumal wenn er nicht im Presswerk ausgeführt wird, verlängert die Produktionszeit und verursacht zusätzliche Druck- und ggf. Transportkosten.

Ferner sind die im Aufdruck verwendeten UV-Farben nicht lebensmittelecht. So bedruckte CDs oder DVDs können daher nicht Lebensmitteln, z.B. Müslipackungen, als Werbeträger oder Dreingabe beigelegt werden.

Die Erfindung besteht darin, die äußerlich sichtbaren Inhalts- oder Werbedarstellungen schon bei der Herstellung der Glassmaster in die Datenfläche der vorerwähnten Medien so zu integrieren,
- dass ein zweiter Arbeitsgang erspart wird und
- es zu keiner gesundheitsschädlichen Reaktion mit Lebensmitteln kommt.

Dazu wird bei der Herstellung vor dem Aufbrennen der Daten auf den Glassmaster an einer beliebigen Stelle innerhalb der Datenfläche durch das Einfügen von Füllsektoren ein bandförmiges, das heißt sich im Kreis auf dem Datenträger herumziehendes, freies Feld geschaffen. Bei dem Beschreiben des Datenträgers wird dieser Sektor, da durch Leerzeichen schon belegt, nicht aufgerufen, d.h. nicht überschrieben, sondern ausgelassen. Dadurch bleibt diese Fläche für das gesonderte Aufbringen von nach außen sichtbaren, d.h. mit bloßem Auge erkennbaren, grafischen oder textlichen Mitteilungen frei.

Auch die Schaffung mehrerer, parallel zueinander verlaufender, ringförmiger, freier Flächen ist möglich.

Die außen auf dem Datenträger sichtbaren Text- oder Grafiksymbole werden in einem zweiten Arbeitsgang in die freigelassenen Felder auf dem Glassmaster eingefügt. Dazu werden Grafik- oder Schriftsymbole vermittels eines Laserstrahlgerätes aus der Fotoresistlackschicht des Glassmasters heraus= gebrannt. Anschließend wird der Glassmaster vollständig ausentwickelt. Dadurch werden die Symbole auf der Oberseite einfarbig weiß sichtbar. Dann folgen das im Herstellungsverfahren übliche Sputtern und Galvanisieren. Von dem fertigen Glassmaster wird sodann der für die Massenproduktion notwendige Stamper hergestellt.

Da den auf den Datenträgern aufgebrachten Daten jeweils eine bestimmte Adresse auf dem Datenfeld zugeordnet ist, auf der mit dem Informations- bzw. Werbeaufdruck versehenen Fläche jedoch keine Daten vorhanden sind, wird diese beim Abspielen des Datenträgers von vornherein nicht aufgerufen, sondern übersprungen und stört die Benutzung daher nicht.

Durch die Erfindung muss nicht mehr jeder einzelne Datenträger in zwei Arbeitsgängen hergestellt werden sondern nur noch der Glassmaster. Von dem davon hergestellten Stamper können dann eine Vielzahl fertiger Datenträger gezogen werden, die nicht mehr nachbearbeitet werden müssen.

Der Aufwand, den Glassmaster in zwei Arbeitsgängen herzustellen, ist ungleich geringer und vor allem kostengünstiger als der, der mit dem separaten Bedrucken jedes einzelnen Datenträgers verbunden ist.

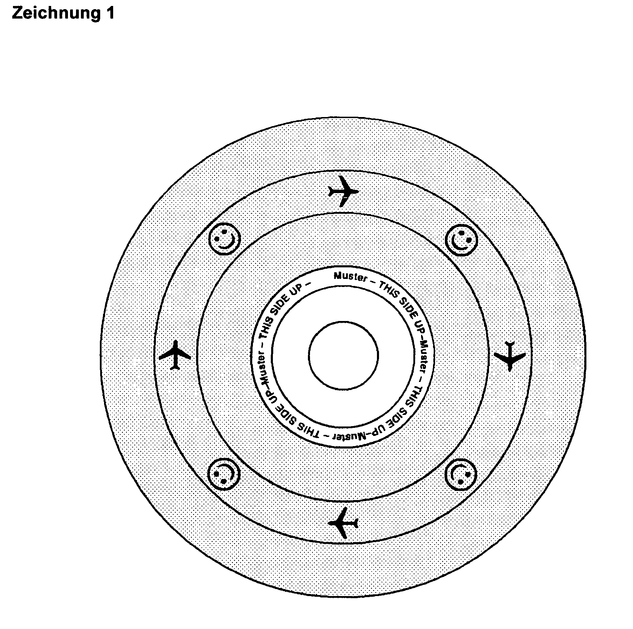

## Patentansprüche

1. Gegenstand des Schutzbegehrens ist das Einfügen einer oder mehrerer ringförmiger Masken von vorher festgelegter Breite und in vorher festgelegter Position in die Datenfläche von CDs, DVDs, HD-DVDs und Blueray-Discs durch Einsetzen von Füllsektoren.
